# EUROPÄISCHE PATENTSCHRIFT

(11) **EP 2 331 008 B1**
(45) Veröffentlichungstag und Bekanntmachung des Hinweises auf die Patenterteilung: **09.05.2018**
(21) Anmeldenummer: 09801379.0
(22) Anmeldetag: 02.10.2009
(51) Int. Cl.: A61C 8/00

(54) **IMPLANTATSYSTEM ZUR FIXIERUNG VON KÜNSTLICHEN ZÄHNEN**
IMPLANT SYSTEM FOR FIXING ARTIFICIAL TEETH
SYSTÈME D'IMPLANT POUR LA FIXATION DE DENTS ARTIFICIELLES

(30) Priorität: 02.10.2008 DE 102008049957
(43) Veröffentlichungstag der Anmeldung: 15.06.2011
(73) Patentinhaber: Firma Bredent medical GmbH, 89250 Senden (DE)
(72) Erfinder: Vizethum, Freimut, 69231 Rauenberg (DE)
(74) Vertreter: Dziewior, Joachim
(86) Internationale Anmeldenummer: PCT/DE2009/001371
(87) Internationale Veröffentlichungsnummer: WO 2010/037376

(56) Entgegenhaltungen:
- WO-A1-00/06042
- US-A1- 2002 028 425
- US-A1- 2005 053 894

## Beschreibung

Die Erfindung bezieht sich auf ein Implantatsystem zur Fixierung von künstlichen Zähnen gemäß den im Oberbegriff des Patentanspruchs 1 angegebenen Merkmalen.

Derartige Dentalimplantate enthalten einen implantierbaren Grundkörper, der entsprechend der Knochensituation, insbesondere in normgerecht aufbereitete Kavitäten und bevorzugt entsprechend der vertikalen Bohrtiefe eingeschraubt wird und nach einer Einheilphase fest mit dem Knochen verwächst. Nachfolgend werden künstliche Zähne im Rahmen eines prothetischen Einsatzes auf einem geeigneten Verbindungsteil fixiert. Dabei ist es oftmals notwendig, aus einer Anzahl verschiedener Komponenten auszuwählen, um Abweichungen der Richtung des Grundkörpers, der prothetischen Achsrichtung der künstlichen Zähne sowie der unterschiedlichen Zahnform sowie der okklusalen Höhe auszugleichen. Dies tritt vor allem dann auf, wenn ein reduziertes Knochenangebot, insbesondere bei Implantation in einem atrophierten Kiefer vorliegt. Auch in "sthetisch anspruchsvollen Situationen, z.B. bei Einzelzahnersatz im Oberkiefer, kann dies häufig auftreten, da dort anatomisch gesehen, die Dentalimplantate häufig stark nach labial geneigt stehen. Ebenso kann dies bei einer Sofortversorgung von Dentalimplantaten eine große prothetische Herausforderung verursachen, da dort die Notwendigkeit besteht, in kurzer Zeit, insbesondere innerhalb von 24 Stunden, eine ansprechende und verlässliche prothetische Versorgung einzugliedern.

Ferner ermöglicht das Verbindungsteil die vertikalen, horizontale und axiale Position des Grundkörpers im Hinblick auf die prothetische Situation anzupassen. Dabei ist es häufig notwendig, die Achsrichtung des Zahnersatzes, welche sich aus funktionalen und ästhetischen Aspekten ergibt, abweichend zur Achsrichtung des Grundkörpers zu verändern. Daher werden Dentalimplantate in der Regel zweiteilig ausgebildet, um aus einer großen Anzahl verschiedener Verbindungsteile die geeigneten auswählen zu können und somit Abweichungen der Richtung des Grundkörpers im Hinblick auf die prothetische Achsrichtung der künstlichen Zähne und der okklusalen Höhe auszugleichen.

Infolge dessen war bisher eine große Vielfalt des Angebots an verschiedensten Verbindungsteilen erforderlich verbunden mit einem hohen bzw. unangemessenen Aufwand für die Fertigung und Lagerhaltung. Zudem war auch häufig eine komplexe individuelle Gestaltung der Aufbauteile bzw. Verbindungsteile durch den Zahntechniker oder den Zahnarzt erforderlich, wobei die zusätzlichen Schritte der Versorgung eine Quelle von Fehlern darstellte. Weiterhin hat es sich als recht nachteilig erwiesen, dass sofern der Aufbau vom Zahnersatz beschliffen wurde, keine vorgefertigten Abdruck- oder Übertragungsteile eingesetzt werden konnten.

Des Weiteren ergaben sich bei Implantatsystemen, welche bereits am Grundkörper fixierte und/oder einteilig mit diesem ausgebildete Aufbauteile oder Verbindungsteile aufweisen, verschiedene Probleme. Derartige Dentalimplantate werden ebenfalls eingeschraubt und benötigen wegen ihrer transgingivalen Konzeption eine ausreichende Primärfestigkeit derart, dass das Implantat bis zur vollständigen knöchernen Einheilung fixiert ist. Es ist jedoch nicht möglich, beim Einschrauben eines solchen Implantates mit fixiertem bzw. einteilig ausgebildeten gewinkelten Aufbau beim Erreichen der Endposition, welche durch die Einschraubtiefe und den Rotationswinkel gekennzeichnet ist, derart auszurichten, dass sowohl die Höhe als auch die rotatorische Position und die Primärfestigkeit optimal eingestellt sind. Bei einer Korrektur der rotatorischen Position verringert sich in der Regel Primärfestigkeit, welche durch das Ein-/Ausdrehmoment gekennzeichnet ist. WO 00/06042 A1 offenbart ein Implantatsystem nach der Präambel des Anspruchs 1 der vorliegenden Anmeldung. Hiervon ausgehend liegt der Erfindung die Aufgabe zugrunde, das Implantatsystem dahingehend auszubilden, dass wenige vorkonfektionierte Komponenten erforderlich sind und in einfacher Weise die Anpassung hinsichtlich Höhe und prothetischer Achsabweichung ermöglicht wird, wobei die Komplexität verringert und die oben beschriebenen Probleme und Nachteile vermieden werden sollen. Zur Schaffung eines Implantat gestützten Zahnersatzes sollen wenige und/oder einfache Arbeitsschritte erforderlich sein und/oder die Verarbeitung und/oder das Verfahren sollen vereinfacht werden. Ferner soll das Implantatsystem derart ausgebildet sein, dass eine hohe oder sichere Primärfestigkeit erreicht wird. Weiterhin soll ein sicherer und/oder weitgehend konstanter Bereich der Primarfestigkeit erreicht werden, und zwar bevorzugt bereits vor Erreichen einer Endposition, welche insbesondere durch die maximalen Werte der Einschraubtiefe und/oder des Rotationswinkels vorgegeben ist.

Die Lösung dieser Aufgabe erfolgt gemäß den im Patentanspruch 1 angegebenen Merkmalen.

Das erfindungsgemäße Implantatsystem enthält spezielle Verbindungsteile mit einer sphärisch gekrümmten Außenkontur zur Aufnahme des korrespondierenden Basisteils. Das Basisteil bzw. dessen Innenfläche weist eine Innenkontur derart auf, dass die Aufnahme der sich verjüngenden und/oder gekrümmten Außenkontur des Verbindungsteils bzw. dessen Ansatzes ermöglicht wird und/oder der im Wesentlichen korrespondiert zur genannten Innenkontur ausgebildete Ansatz in das Basisteil eingreift. Zum Basisteil hin geht das Verbindungsteil in den sich im Durchmesser verjüngenden Ansatz über. Das Implantatsystem enthält in bekannter Weise eine Anzahl von Grundkörpern mit unterschiedlichen Längen und Durchmessern. Die Außenfläche und/oder die Innenfläche des Basisteils sind standardisiert und/oder werden keiner Bearbeitung unterzogen. Die Außenflächen und/oder Innenflächen der Basisteile für Grundkörper gleichen Durchmessers des Implantatsystems sind übereinstimmend ausgebildet. Das oder die Basisteile sind zur Fixierung von künstlichen Zähnen ausgebildet, seien es Einzelzähne, Kronen, Brücken, Stegkonstruktionen oder sonstige Suprakonstruktionen. Die Außenfläche des sich verjüngenden sphärisch gekrümmten Verbindungsteils bzw. dessen Ansatzes ist sphärisch gekrümmt, mit einem Radius von 15 mm bis 30 mm, beispielsweise von 20 mm. Erfindungsgemäß wird bei abweichender Achsrichtung des Implantates und/oder des Zahnersatzes das entsprechende Verbindungsteil im Wesentlichen von okklusal eingekürzt. Die Ausrichtung des Basisteils und somit des mit diesem verbindbaren oder verbundenen Zahnersatzes bezüglich des Verbindungsteils und/oder des Grundkörpers in axialer Richtung und/oder hinsichtlich der Winkelstellung wird durch Bearbeitung des Ansatzes, insbesondere durch okklusale Einkürzung vorgegeben. Somit erweitert sich die mögliche Achsabweichung im gleichen Verhältnis wie der effektive Winkel des anguliert stehenden Verbindungsteils größer wird.

Im Ergebnis erfolgt also eine Einkürzung des Ansatzes nur soweit, daß der Zahnersatz in einer (gemeinsamen) Achsrichtung auf die meist unterschiedlich ausgerichteten Implantate aufgesetzt werden kann, was bedeutet, daß der Ansatz bzw. die Ansätze keine Hinterschneidungen mehr bilden dürfen. Das Einkürzen kann dabei senkrecht zur Längsachse des Implantats oder auch in dazu schräger Ebene erfolgen, wobei in letzterem Fall die Einkürzung bzw. Abschrägung genau dort vorzunehmen ist, wo der Ansatz eine Hinterschneidung bildet. Diese schräge Einkürzung kann insoweit vorteilhaft sein, als hierdurch mehr Friktionsfläche erhalten bleibt.

Da mit größer werdendem Konuswinkel gleichzeitig die Haftkraft zwischen dem Verbindungsteil und dem Basisteil abnimmt, wird dies erfindungsgemäß durch eine Veränderung der Oberflächenstruktur ausgeglichen. So können zur Stärkung oder Verbesserung der Haftung zwischen dem Basisteil und dem Verbindungsteil im Verbindungsteil, insbesondere im basalen Teil des Verbindungsteils, Retentionsrillen eingebracht werden oder es können Mikrostrukturen aufgebracht werden oder es können chemische Komponenten aufgebracht werden. Das erfindungsgemäße Implantatsystem enthält Implantate als Grundkörper, Verbindungsteile und Basisteile. Der oder die Grundkörper sind zylindrisch oder konisch ausgebildet und mit einem insbesondere aufgesetzten Gewinde zur Verankerung im Kieferknochen versehen und weisen bevorzugt eine mikrostrukturierte Oberfläche auf. Ferner besteht der Grundkörper bevorzugt aus Titan Grade 1 bis 4 oder einer Titanlegierung oder Keramik, wie beispielsweise ZrO]2[. In zweckmäßiger Weise ist der Grundkörper insbesondere zur einfachen Variation der vertikalen Position apikal bzw. im Bereich des apikalen Endes schneidend und bohrend ausgebildet.

Das Verbindungsteil besteht vorteilhaft aus Titan Grade 1 bis 4 oder einer Titanlegierung oder Oxidkeramik oder einem biokompatiblen Polymerwerkstoff. Im Verbindungsbereich zwischen dem Grundkörper und dem Verbindungsteil sind in zweckmäßiger Weise Elemente zur Rotationssicherung angeordnet, wobei insbesondere auf der koronalen Stirnfläche des Grundkörpers eine nach oben zum Verbindungsteil hin ausgerichtete Verzahnung vorgesehen ist, in welche eine korrespondierende Verzahnung an der dem Grundkörper zugewandten Stirnfläche des Verbindungsteils eingreift. Weiterhin können zur Rotationssicherung des Verbindungsteils bezüglich des Grundkörpers ineinander greifende Mehrkantverbindungen, welche beispielsweise als Hexagon ausgebildet sind, vorgesehen sein.

Das Basisteil ist zum Aufsetzen auf den sich verjüngenden Ansatz des Verbindungsteils und zur Fixierung über eine axiale Verschraubung, insbesondere mittels einer axialen Halteschraube, oder Zementierung ausgebildet. Das Verbindungsteil geht zum Basisteil hin in einem sich im Durchmesser verjüngenden Ansatz über und/oder enthält einen derartigen Ansatz. In zweckmäßiger Weise besteht das Basisteil aus Titan oder einer Titanlegierung oder aus Oxidkeramik oder Kunststoff, z. B. aus POM oder PMMA oder anderen biokompatiblen Polymerwerkstoffen. Das Basisteil ist mit einer Innenkontur und/oder mit einer Innenfläche derart ausgebildet oder ausgestattet, dass die Aufnahme der sich verjüngenden Kontur des Verbindungsteils ermöglicht ist. Das Basisteil ist mit einer korrespondierenden und sich verjüngenden Innenkontur zur Aufnahme des Verbindungsteils bzw. dessen Ansatzes ausgebildet, wobei der Durchmesser der korrespondierenden, sich verjüngenden Innenkontur zur Aufnahme des Verbindungsteils an seiner schmalsten und/oder okklusalen Stelle bevorzugt 2 bis 4 mm beträgt, beispielsweise 2,5 mm. In einer bevorzugten Ausgestaltung ist die Innenfläche der korrespondierenden, sich verjüngenden Innenkontur oder Innenfläche des Basisteils zur Aufnahme des Verbindungsteils mit einem Radius von 15 mm bis 30 mm gekrümmt, beispielsweise mit 20 mm. In einer anderen Ausgestaltung ist die Innenfläche der korrespondierenden, sich verjüngenden Innenkontur zur Aufnahme des Verbindungsteils mit einem Radius ausgebildet, welcher zum Verbindungsteil hin abnimmt, bevorzugt von 30 mm bis auf 20 mm. Darüber hinaus hat es sich als besonders vorteilhaft erwiesen, dass die Innenfläche der korrespondierenden, sich verjüngenden Innenkontur oder Innenfläche des Basisteils mit einem Radius gekrümmt ist, welcher um 0,05 mm bis 0,2 mm größer ist als der Radius der korrespondierenden Außenkontur des Verbindungsteils bzw. dessen Ansatzes.

In bevorzugter Weise ist der Durchmesser des sich verjüngenden Verbindungsteils bzw. dessen Ansatzes an seiner dünnsten und/oder okklusalen Stelle mit 2 bis 4 mm vorgegeben, beispielsweise mit 2,5 mm. Des Weiteren ist die Außenfläche des sich verjüngenden sphärisch gekrümmten Verbindungsteils bzw. dessen Ansatzes mit einem Radius von 15 mm bis 30 mm, insbesondere 20 mm, gekrümmt vorgegeben. Alternativ ist die Außenfläche des sich verjüngenden Verbindungsteils bzw. dessen Ansatzes mit einem vorgegebenen Radius gekrümmt, welcher zum Verbindungsteil hin abnimmt, insbesondere von 30 mm bis auf 20 mm. Des Weiteren hat es sich als besonders vorteilhaft erwiesen, dass die Außenfläche des Verbindungsteils und/oder dessen Ansatzes über eine vorgegebene Länge von bevorzugt 2 mm bis 5 mm mit Retentionen versehen sind, welche eine vorgegebene Breite und/oder Tiefe aufweisen. Zweckmäßig ist die Breite der Retentionen im Bereich von 0,05 mm bis 0,4 mm vorgegeben und/oder die Tiefe der Retentionen ist im Bereich von 0,05 mm bis 0,4 mm vorgegeben. Weiterhin hat es sich als zweckmäßig erwiesen, die Außenfläche des Verbindungsteils über eine vorgegebene Länge mit Mikrostrukturen zu versehen, und zwar vorteilhaft über eine vorgegebene Länge, insbesondere im Bereich von 2 mm bis 5 mm, und/oder mit Mikrostrukturen in der Größenordnung von 5 Mikrometer bis 100 Mikrometer. Zusätzlich oder alternativ ist die Außenfläche des Verbindungsteils bzw. dessen Ansatzes über eine vorgegebene Länge mit oberflächenaktiven Substanzen als Haftvermittler beschichtet, wobei die genannte Länge bevorzugt im Bereich von 2 mm bis 5 mm vorgegeben ist.

Gemäß einer bevorzugten Weiterbildung der Erfindung ist die Innenkontur und/oder die Innenfläche des Basisteils über eine vorgegebene Tiefe mit Retentionen versehen, wobei die genannte Tiefe bevorzugt im Bereich von 2 mm bis 5 mm vorgegeben ist und/oder die Retentionen eine Breite von 0,05 mm bis 0,4 mm und/oder eine Tiefe von 0,05 bis 0,4 mm aufweisen. Zusätzlich oder alternativ ist die Innenkontur bzw. die Innenfläche des Basisteils über eine vorgegebene Tiefe mit Mikrostrukturen versehen, wobei die Tiefe bevorzugt im Bereich zwischen 2 mm bis 5 mm vorgegeben ist und/oder die Mikrostrukturen in der Größenordnung von 5 Mikrometer bis 100 Mikrometer vorgegeben sind. Ferner ist in zweckmäßiger Weise zusätzlich oder alternativ die Innenkontur und/oder die Innenfläche des Basisteils über eine vorgegebene Tiefe mit oberflächenaktiven Substanzen als Haftvermittler beschichtet, wobei die genannte Tiefe bevorzugt mit 2 mm bis 5 mm vorgegeben ist.

Des Weiteren ist in bevorzugter Weise im Übergangsbereich zwischen dem aufgesetzen Basisteil und dem Verbindungsteil dieses mit einer konischen Abschrägung versehen, deren Länge bevorzugt im Bereich von 0,3 bis 0,6 mm vorgegeben ist. Es sei festgehalten, dass das Verbindungsteil mittels einer axialen Halteschraube auf dem Grundkörper fixiert ist oder dass das Verbindungsteil auf dem Grundkörper aufzementiert oder geklebt ist.

In einer besonderen Ausgestaltung der Erfindung ist die Oberfläche des Grundkörpers zumindest teilweise mit retentiven Strukturen derart versehen, dass elastische Rückstellkräfte des Knochens auf den Grundkörper wirksam sind. Erfindungsgemäß enthält das Implantatsystem ein Instrumentarium, insbesondre Bohrer, deren Außengeometrie auf die der Grundkörper derart abgestimmt ist, dass bei der Insertion des Grundkörpers in die mit dem zugeordneten Instrument und/oder Bohrer vorbereitete Knochenkavität eine traumatische Schädigung des Knochens, insbesondere aufgrund einer Erwärmung vermieden wird, und/oder dass das Eindrehmoment im Hinblick auf eine atraumatische Insertion einen maximal zulässigen Grenzwert nicht überschreitet. Insbesondere ist eine zirkuläre Retentionsfläche auf der Oberfläche des Implantatgrundkörpers mit retentiven Strukturen vorgesehen. Das Instrumentarium und die Retentionen sind derart aufeinander abgestimmt, dass die elastischen Rückstellkräfte des Knochens in Kombination mit der Aufbereitungsfunktion der Instrumente, insbesondere des oder der Bohrer zur Aufbereitung der Kavität im Knochen, und/oder derart eingestellt, dass bereits vor Erreichen der Endposition ein sicherer und/oder weitgehend konstanter Bereich der Primärfestigkeit erreicht wird. So ist insbesondere bei einem eingängig ausgebildeten Gewinde des Implantatgrundkörpers mit einer Steigerung von im Wesentlichen 1 der Bereich im Wesentlichen zwischen 30 Ncm bis 50 Ncm vorgegeben. Es sei an dieser Stelle ausdrücklich festgehalten, dass diese nachfolgend im Einzelnen erläuterte Ausgestaltung des Implantatsystems im Rahmen der Erfindung sowohl in Kombination mit der oben erläuterten Ausbildung des Implantatsystems mit sphärisch gekrümmter Außenkontur der Verbindungsteile und korrespondierend ausgebildeter Basisteile vorgesehen ist, als auch bei in anderer Weise ausgebildeten Implantatsystemen oder Implantatgrundkörpern.

Das erfindungsgemäße Implantatsystem enthält den Grundkörper, das Verbindungsteil und das Basisteil, wobei der Grundkörper bevorzugt im Wesentlichen zylindrisch ausgebildet ist und/oder ein insbesondere aufgesetztes Gewinde zur Verankerung im Knochen enthält. Der Grundkörper weist bevorzugt eine mikrostrukturierte Oberfläche mit einer vorgegebenen Porenstruktur auf, bevorzugt von überwiegend 0,2 bis 5 Mikrometer, insbesondere im Wesentlichen überwiegend 3 Mikrometer. Das Verbindungsteil ist direkt auf dem Grundkörper fixiert, welcher aus einem biokompatiblen Implantatwerkstoff, insbesondere Titan oder Titanlegierung oder Oxidkeramik, besteht.

Zumindest ein Teilbereich der Oberfläche des Grundkörpers weist als Retentionen vorteilhaft eine anisotrope schuppenartige Struktur derart auf, dass das Rückdrehmoment durch Spreizung in die elastische Rückstellung erhöht wird. Erfindungsgemäß weist zusätzlich oder alternativ insbesondere das Gewinde Retentionen in Form von Unterbrechungen auf, welche der Eindrehrichtung derart entgegen gerichtet sind, dass das Rückdrehmoment durch Spreizung in die elastische Rückstellung des Knochens erhöht wird. In bevorzugter Weise sind im oberen, dem koronalen Ende zugewandten Drittel des Grundkörpers oder im mittleren Drittel des Grundkörpers Unterbrechungen derart angeordnet, welche der Eindrehrichtung entgegen gerichtet sind und/oder mittels welchen das Rückdrehmoment durch Spreizung in die elastische Rückstellung des Knochens erhöht wird. In bevorzugter Weise weisen diese Unterbrechungen eine vorgegebene Tiefe auf, und zwar im Bereich von 0,05 bis 0,4 mm. Weiterhin weisen diese Unterbrechungen in bevorzugter Weise eine Breite im Bereich von 0,4 mm bis 2 mm auf. In bevorzugter Weise sind die genannten Unterbrechungen dachziegelförmig und der Eindrehrichtung des Grundkörpers entgegengerichtet angelegt, um das Rückdrehmoment durch Spreizung in die elastische Rückstellung des Knochens zu erhöhen.

Oberhalb des Gewindebereichs des Grundkörpers und/oder koronal an den Grundkörper anschließend ist das Verbindungsteil angeordnet, welches in vorteilhafter Weise eine transgingivale Oberfläche mit einer Rauigkeit kleiner 0,5 Mikrometer Ra besitzt. Weiterhin ist die transgingivale Oberfläche des Verbindungsteils mit einer zylindrischen, ovalen oder runden Einziehung versehen, welche zur Einlagerung der Gingiva vorgesehen ist und/oder welche einen Radius im Bereich von 1 mm bis 3 mm aufweist. In bevorzugter Weise verläuft zusätzlich oder alternativ die Einziehung girlandenförmig um den Grundkörper, wobei vorteilhaft der tiefste Punkt axial und/oder radial zwischen 0,5 mm bis 2 mm unter dem höchsten Punkt liegt und/oder angeordnet ist.

In einer besonderen Weiterbildung geht nach koronal das Verbindungsteil in eine sich verjüngende Außenkontur über, welche gegen die Achsneigung oder die Ausrichtung der Achse des Grundkörpers um einen vorgegebenen Winkel geneigt ist, wobei dieser Winkel bevorzugt zwischen 0 Grad bis 35 Grad vorgegeben ist. Der derart vorgegebene und/oder sich verjüngende Ansatz des Verbindungsteils ist zur Fixierung des Basisteils vorgesehen, insbesondere über Zementierung oder Verklebung.

Weiterhin hat es sich als vorteilhaft erwiesen, dass der Durchmesser des sich verjüngenden Verbindungsteils an seiner dünnsten oder okklusalen Stelle im Bereich von 2 mm bis 4 mm vorgegeben ist und insbesondere im Wesentlichen 2,5 mm beträgt. Weiterhin ist die Außenfläche des sich verjüngenden Verbindungsteils vorteilhaft gekrümmt ausgebildet, und zwar insbesondere mit einem Radius von 15 mm bis 30 mm, insbesondere von im Wesentlichen 20 mm. Alternativ kann die Außenfläche des sich verjüngenden Verbindungsteil mit einem Radius gekrümmt sein, welcher zum Verbindungsteil hin abnimmt, insbesondere von 30 mm bis auf 20 mm. Vorteilhaft ist die Außenfläche des sich verjüngenden Verbindungsteils mit retentiven Elementen, insbesondere Abflachungen oder Rillen, versehen. Die an der Außenfläche des sich verjüngenden Verbindungsteils vorgesehen retentiven Elemente, welche insbesondere als Abflachungen oder Rillen ausgebildet sind, verlaufen in zweckmäßiger Weise radial um die Achse des Implantatgrundkörpers und/oder bevorzugt in einem vorgegebenen Winkel zur Implantatachse geneigt, wobei dieser Winkel bevorzugt im Bereich von 10 Grad bis 25 Grad vorgegeben ist.

Das auf das Verbindungsteil erfindungsgemäß aufsetzbare Basisteil ist bevorzugt ebenfalls mit einer korrespondierenden, sich verjüngenden Innenkontur oder Innenfläche ausgestattet, zur Aufnahme des genannten Verbindungsteils. Der Durchmesser der Innenkontur bzw. Innenfläche des Basisteils ist an seiner dünnsten und/oder okklusalen Stelle vorteilhaft im Bereich von 2 mm bis 4 mm vorgegeben und beträgt insbesondere 2,5 mm. Weiterhin ist in vorteilhafter Weise die genannte Innenfläche oder verjüngende Innenkontur des Basisteil gekrümmt ausgebildet, bevorzugt mit einem Radius von 15 mm bis 30 mm, insbesondere von im Wesentlichen 20 mm. Des Weiteren kann die Innenfläche bzw. Innenkontur des Basisteils in vorteilhafter Weise mit einem Radius gekrümmt ausgebildet sein, welcher zum Verbindungsteil hin abnimmt, bevorzugt von im Wesentlichen 30 mm bis auf 20 mm.

Weiterhin ist die Außenfläche des Verbindungsteils über eine vorgegebene Länge mit Retentionen versehen, wobei die Länge zweckmäßig im Bereich von 2 mm bis 5 mm vorgegeben ist und/oder die Retentionen eine Breite von 0,1 bis 0,4 mm und/oder eine Tiefe von 0,1 bis 0,4 mm aufweisen. Alternativ oder zusätzlich kann ferner die Außenfläche des Verbindungsteils über eine vorgegebene Länge mit Mikrostrukturen versehen sein, wobei die genannte Länge bevorzugt im Bereich von 2 bis 5 mm vorgegeben ist und/oder die Mikrostrukturen überwiegend und/oder eine Größenordnung von 5 Mikrometer bis 100 Mikrometer aufweisen. Des Weiteren kann die Außenfläche des Verbindungsteils über eine vorgegebene Länge, insbesondere von 2 mm bis 5 mm, mit oberflächenaktiven Substanzen als Haftvermittler beschichtet sein.

Ferner ist in einer besonderen Ausbildung des Basisteils dessen Innenkontur oder Innenfläche über eine vorgegebene Tiefe mit Retentionen versehen, wobei die genannte Tiefe bevorzugt mit 2 mm bis 5 mm vorgegeben ist und/oder die Retentionen eine Breite von 0,1 mm bis 0,4 mm und/oder eine Tiefe von 0,1 mm bis 0,4 mm aufweisen.

Des Weiteren kann im Rahmen der Erfindung die Innenkontur oder Innenfläche des Basisteils über eine vorgegebene Tiefe mit Mikrostrukturen versehen sein, wobei die Tiefe bevorzugt im Bereich von 2 mm bis 5 mm und/oder die Mikrostrukturen zumindest überwiegend in der Größenordnung von 5 bis 100 Mikrometer vorgegeben sind. Auch kann die Innenkontur oder Innenfläche des Basisteils über eine vorgegebene Tiefe mit oberflächenaktiven Substanzen als Haftvermittler beschichtet sein, wobei die genannte Tiefe bevorzugt im Bereich von 2 mm bis 5 mm vorgegeben ist.

Schließlich ist in einer besonderen Ausbildung die Innenfläche des sich verjüngenden Basisteils mit retentiven Elementen, insbesondere Abflachungen oder Rillen, versehen, welche in korrespondierend ausgebildete Elemente des Verbindungsteils eingreifen.

Die Erfindung wird nachfolgend anhand der in der Zeichnung dargestellten Ausführungsbeispiele näher erläutert, ohne dass insoweit eine Beschränkung erfolgt. Es zeigen:
- Fig. 1, 2: den Implantatgrundkörper in seitlichen Ansichten bzw. teilweise geschnitten,
- Fig. 3: eine Ansicht des teilweise dargestellten Implantatgrundkörpers mit aufgesetztem Verbindungsteil,
- Fig. 4: in seitlicher Ansicht den Implantatgrundkörper mit aufgesetztem Verbindungsteil und aufgesetztem Basisteil für eine Krone,
- Fig. 5: teilweise den Implantatgrundkörper mit dem aufgesetzten und mittels Halteschraube fixierten Verbindungsteil sowie mit dem aufgesetzten Basisteil in einer axialen Schnittebene,
- Fig. 6, 7: die Vorgehensweise bzw. das Verfahren der im Wesentlichen okklusalen Einkürzung des Verbindungsteils.

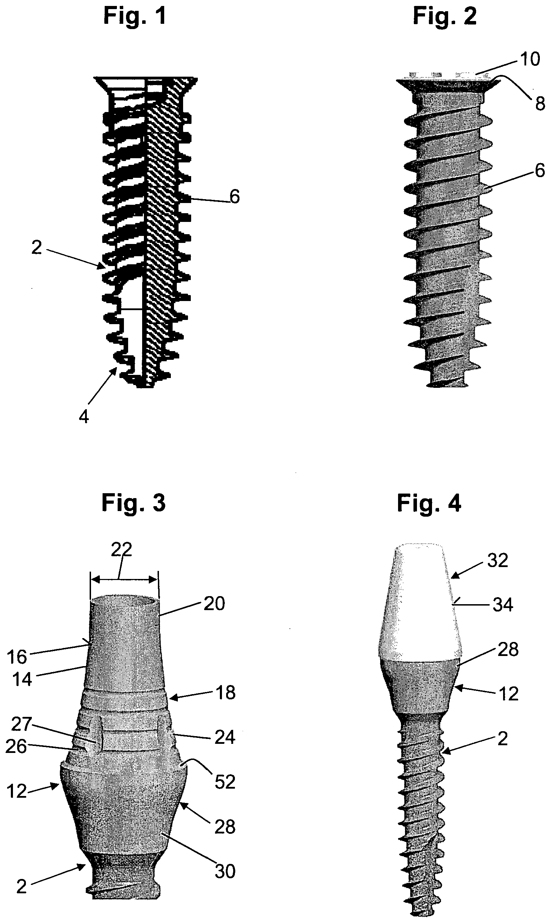

Fig. 1 und 2 zeigen Ausführungsformen des Implantatgrundkörpers 2, nachfolgend kurz Grundkörper genannt, welcher im Wesentlichen zylindrisch ausgebildet ist mit einem konisch auslaufenden apikalen Ende 4. Der Grundkörper 2 enthält an seiner Außenfläche ein Gewinde 6 und ist zur einfachen Variation der vertikalen Position im Bereich des appikalen Endes 4 schneidend und/oder bohrend ausgebildet. Gemäß Fig.2 enthält der Grundkörper 2 an seiner koronalen Stirnfläche 8 Elemente 10, welche insbesondere zur Rotationssicherung des hier nicht dargestellten Verbindungsteils dienen und hier als eine nach oben ausgerichtete radiale Verzahnung ausgebildet sind. Das Verbindungselement enthält korrespondierend ausgebildete Elemente, welche in die Elemente 10 eingreifen, wobei über die genannten Elemente die Verbindung erfolgt.

Fig. 3 zeigt teilweise den Grundkörper 2 mit dem aufgesetzten Verbindungsteil 12. Das Verbindungsteil 12 weist einen sich nach okklusal verjüngenden Ansatz 14 auf, welcher eine sphärisch gekrümmte und/oder im Wesentlichen rotationssymmetrische Außenkontur oder Außenfläche 16 mit dem Radius 18 besitzt, welcher beispielsweise 20 mm beträgt. Am okklusalen Ende 20 bzw. der schmalsten Stelle des Ansatzes 14 beträgt dessen Durchmesser 22 beispielsweise 2,5 mm. Der Ansatz 14 enthält im basalen Bereich 24 Retentionen 26, 27. Das Verbindungsteil 12 enthält einen an den Grundkörper 2 anschließenden transgingivalen Bereich 28, wobei dessen Oberfläche eine Einziehung 30 aufweist.

Fig. 4 zeigt den Grundkörper 2 mit dem aufgesetzten Verbindungsteil 12 zusammen mit dem auf dessen Ansatz aufgesetzten Basisteil 32, beispielsweise für eine Krone. Das Basisteil 32 ist erfindungsgemäß als eine Kappe ausgebildet, welche den Ansatz des Verbindungsteils 12 übergreift und/oder eine im Wesentlichen konische Außenfläche 34 besitzt, und zwar ausgehend vom okklusalen Ende in Richtung zum transgingivalen Bereich 28 sich erweitert.

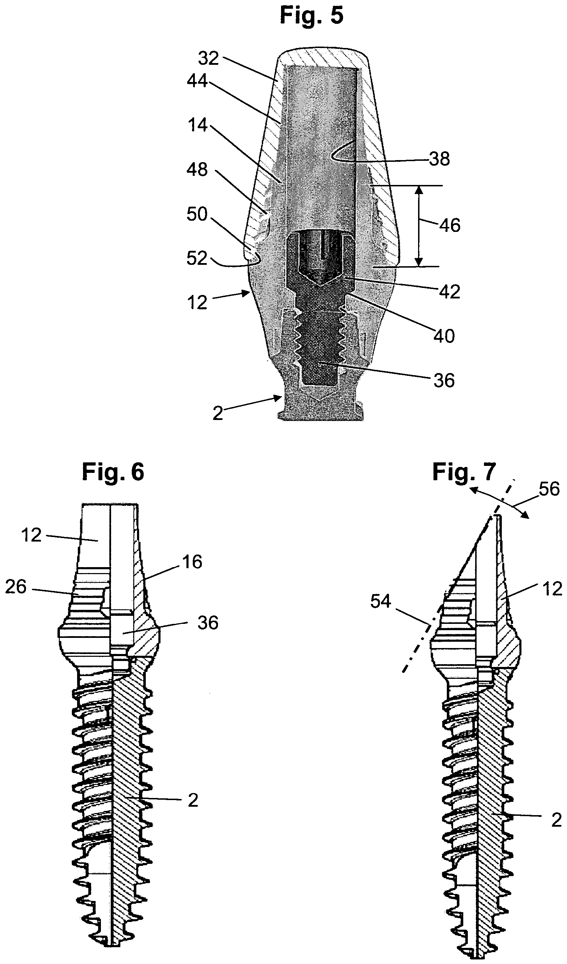

Fig. 5 zeigt in einer axialen Schnittebene teilweise den Grundkörper 2, mit welchem das aufgesetzte Verbindungsteil 12 mittels einer Halteschraube 36 fixiert ist. Wie ersichtlich, enthält das Verbindungsteil 12 eine axiale Durchgangsbohrung 38 mit einer Ringschulter 40, an welcher der Schraubenkopf 42 anliegt. Auf dem sich konisch verjüngenden und/oder rotationssymmetrischen Ansatz 14 ist das Basisteil 32 aufgesetzt, wobei die Fixierung des Basisteils 2 mittels einer hier nicht dargestellten Verschraubung oder Zementierung erfolgt. Das Basisteil 32 weist eine Innenkontur oder Innenfläche 44 auf, welche zur Aufnahme der sich verjüngenden Kontur des Verbindungsteils 12 geeignet und/oder korrespondierend gekrümmt und/oder im Wesentlichen rotationssymmetrisch ausgebildet ist. In bevorzugter Weise enthält die Innenkontur oder Innenfläche 44 des Basisteils 32 über eine vorgegebene Tiefe oder Länge 46 Retentionen 48. Im Übergangsbereich und/oder am basalen Ende 50 des Basisteils 32 enthält das Verbindungsteil 12 eine bevorzugt konische Abschrägung und/oder Auflagefläche 52, auf welcher das Basisteil 32 in bevorzugter Weise aufsitzt.

Anhand der Fig. 6 und 7 wird das Verfahren zur Fixierung von künstlichen Zähnen näher erläutert. Gemäß Fig. 6 wird auf dem Grundkörper 2 das Verbindungsteil 12, welches die sphärisch gekrümmte Außenkontur 16 mit den als umlaufende Rillen 26 ausgebildete Retentionen aufweist, mittels der Halteschraube 36 fixiert. Alternativ kann die Fixierung ferner durch Klemmen oder Zementieren durchgeführt werden. Nachfolgend wird das Verbindungsteil 12 unter Berücksichtigung und den Anforderungen der prothetischen Achsrichtung gekürzt, wie in Fig. 7 mittels der strichpunktierten 54 angedeutet, wobei gemäß dem Doppelpfeil 56 die Ausrichtung vorgegeben wird. Die im Wesentlichen axiale und/oder unter vorgegebenem Winkel zur Längsachse des Grundkörpers 2 verlaufende Einkürzung wird beispielsweise durch Beschleifen mit einem rotierenden Instrument durchgeführt. Somit werden durch einfaches Kürzen insbesondere Unterschnitte entfernt, welche bei unterschiedlichen Achsrichtungen von gemeinsam zu versorgenden Implantaten auftreten.

## Patentansprüche

1. Implantatsystem zur Fixierung von künstlichen Zähnen, enthaltend Dentalimplantate, welche einen insertierbaren Grundkörper (2) und ein auf diesem fixierbares Verbindungsteil (12) enthalten, wobei die Verbindungsteile (12) einen Ansatz (14) mit einer sich verjüngenden und sphärisch gekrümmten Außenkontur (16) aufweisen und ein oder mehrere Basisteile (32) vorgesehen sind, wobei das oder die Basisteile (32) eine Innenkontur oder Innenfläche (44) aufweisen, welche die Aufnahme oder das Eingreifen des im Wesentlichen korrespondierend ausgebildeten Ansatzes (14) des zugeordneten Verbindungsteils (12) ermöglichen, **dadurch gekennzeichnet, dass** die sich verjüngende und sphärisch gekrümmte Außenkontur (16) des Ansatzes (14) mit einem Radius von 15 mm bis 30 mm gekrümmt ist, wobei der Radius zum Verbindungsteil hin abnimmt, insbesondere von 30 mm bis auf 20 mm, und dass der Durchmesser des Ansatzes (14) am okklusalen Ende (20) im Bereich von 2 mm bis 4 mm vorgegeben ist.

2. Implantatsystem nach Anspruch 1, **dadurch gekennzeichnet, dass** der Ansatz (14) bearbeitbar ausgebildet und/oder im Wesentlichen von okklusal einkürzbar ist.

3. Implantatsystem nach einem der Ansprüche 1 oder 2, **dadurch gekennzeichnet, dass** die Außenfläche (16) des Ansatzes (14), insbesondere in einem basalen Bereich (24) Retentionen (26, 27) aufweist, oder mit retentiven Elementen, wie zum Beispiel Abflachungen oder Rillen versehen ist, welche insbesondere radial um die Implantatachse verlaufen und/oder in einem Winkel von 10 bis 25° zur Implantatachse geneigt sind.

4. Implantatsystem nach einem der Ansprüche 1 bis 3, **dadurch gekennzeichnet, dass** die Außenfläche (16) des Ansatzes (14), insbesondere im basalen Bereich (24) und/ oder über eine Länge von bevorzugt 2 mm bis 5 mm mit Retentionen (26, 27) mit einer Breite von 0,05 mm bis 0,4 mm und/oder einer Tiefe von 0,05 bis 0,4 mm versehen ist, und/oder dass die Außenfläche (16) mit Mikrostrukturen überwiegend in einer Größenordnung von 5 bis 100 Mikrometer versehen ist, und/oder dass die Außenfläche (16) mit oberflächenaktiven Substanzen als Haftvermittler beschichtet ist, und/oder dass die Außenfläche (16) zur Fixierung, insbesondere über Zementierung oder Verklebung des Basisteils (32) ausgebildet ist.

5. Implantatsystem nach einem der Ansprüche 1 bis 4, **dadurch gekennzeichnet, dass** das Basisteil (32) eine mit der Außenkontur oder Außenfläche (16) des Ansatzes (14) korrespondierende, sich verjüngende Innenfläche oder Innenkontur (34) zur Aufnahme des Ansatzes (14) aufweist, und/oder dass der Durchmesser der Innenkontur oder Innenfläche (44) des Basisteils (32) im Bereich des okklusalen Endes im Bereich von 2 mm bis 4 mm vorgegeben ist, und/oder dass die Innenkontur oder Innenfläche (44) des Basisteils (32) zumindest gleich groß oder um einen vorgegebenen Betrag, zweckmäßig um 0,05 mm bis 0,2 mm größer ist als die korrespondierende Außenkontur (16) des Ansatzes (14).

6. Implantatsystem nach einem der Ansprüche 1 bis 5, **dadurch gekennzeichnet, dass** die Innenkontur oder Innenfläche (44) des Basisteils (32) über eine Tiefe oder Länge (46) Retentionen (48) aufweist, deren Breite und/oder Tiefe im Bereich von 0,05 mm bis 0,4 mm vorgegeben sind, und/oder dass die Innenkontur oder Innenfläche (44) des Basisteils (32) bevorzugt über eine vorgegebene Tiefe oder Länge (46), insbesondere im Bereich von 2 mm bis 5 mm, mit Mikrostrukturen überwiegend in der Größenordnung von 5 bis 100 Mikrometer aufweist und/oder dass die Innenkontur oder Innenfläche (46) des Basisteils (32) über eine vorgegebene Tiefe oder Länge (46), bevorzugt im Bereich von 2 mm bis 5 mm, mit oberflächenaktiven Substanzen als Haftvermittler beschichtet ist.

7. Implantatsystem nach einem der Ansprüche 1 bis 6, **dadurch gekennzeichnet, dass** das Verbindungsteil (12) im Übergangsbereich zum aufgesetzten Basisteil (32) eine Auflagefläche und/oder bevorzugt konische Abschrägung (52) aufweist, auf welcher das basale Ende (50) des Basisteils (32) aufliegt, wobei die konische Abschrägung und/oder Auflagefläche (52) bevorzugt eine Länge im Bereich von 0,3 mm bis 0,6 mm aufweist.

8. Implantatsystem nach einem der Ansprüche 1 bis 7, **dadurch gekennzeichnet, dass** der Grundkörper (2) eine mikrostrukturierte Oberfläche aufweist, und/oder dass die Oberfläche eine Porenstruktur von im Wesentlichen oder überwiegend von 0,2 bis 5 Mikrometer, insbesondere von im Wesentlichen 3 Mikrometer aufweist.

9. Implantatsystem nach einem der Ansprüche 1 bis 8, **dadurch gekennzeichnet, dass** die Oberfläche des Grundkörpers (2) eine anisotrope schuppenartige Struktur aufweist, mittels welcher das Rückdrehmoment durch Spreizung in eine elastische Rückstellung des Knochens erhöht wird oder vergrößerbar ist, und/oder dass das Gewinde (6) des Grundkörpers (2) Unterbrechungen enthält, welche der Eindrehrichtung entgegengerichtet sind, derart, dass das Rückdrehmoment durch Spreizung in die elastische Rückstellung des Knochens erhöht oder vergrößert wird.

10. Implantatsystem nach einem der Ansprüche 1 bis 9, **dadurch gekennzeichnet, dass** der Grundkörper (2) im oberen Drittel der Oberfläche Unterbrechungen enthält, welche der Eindrehrichtung derart entgegengerichtet sind, dass das Rückdrehmoment durch Spreizung in die elastische Rückstellung des Knochens erhöht oder vergrößert wird, oder dass die Oberfläche des Grundkörpers (2) im mittleren Drittel Unterbrechungen enthält, welche der Eindrehrichtung derart entgegengerichtet sind, dass das Rückdrehmoment durch Spreizung in die elastische Rückstellung des Knochens vergrößert wird.

11. Implantatsystem nach Anspruch 10, **dadurch gekennzeichnet, dass** die Unterbrechungen eine Tiefe im Bereich von 0,05 bis 0,4 mm aufweisen und/oder eine Breite im Bereich 0,4 mm bis 2 mm aufweisen, und/oder dass die genannten Unterbrechungen dachziegelförmig und der Eindrehrichtung des Grundkörpers entgegengerichtet angelegt sind.

12. Implantatsystem nach einem der Ansprüche 1 bis 11, **dadurch gekennzeichnet, dass** oberhalb des Gewindebereiches und/oder des Grundkörpers (2) das Verbindungsteil (12) einen transgingivalen Bereich (28) aufweist, dessen Oberfläche eine Rauhigkeit kleiner 0,5 Mikrometer Ra vorgegeben ist, und/oder dass die genannte transgingivale Oberfläche (28) mit einer zylindrischen oder ovalen oder unrunden Einziehung (30) zur Einlagerung der Gingiva versehen ist, wobei bevorzugt ein Radius von 1 mm bis 3 mm der Einziehung vorgegeben ist, und/oder dass der Grundkörper (2) eine derartige bevorzugt girlandenförmig ausgebildete Einziehung aufweist, wobei bevorzugt der tiefste Punkt axial und/oder radial im Bereich von 0,5 mm bis 2 mm unter dem höchsten Punkt liegt.

13. Implantatsystem nach einem der Ansprüche 1 bis 12, **dadurch gekennzeichnet, dass** weiter nach koronal das Verbindungsteil (12) in eine sich verjüngende Außenkontur übergeht, welche gegen die Achsneigung oder die Ausrichtung der Achse des Grundkörpers (2) um einen vorgegebenen Winkel geneigt ist, wobei dieser Winkel bevorzugt zwischen 0° bis 30° vorgeben ist.

## Claims

1. Implant system for fixing artificial teeth containing dental implants which contain an insertable base body (2) and a connecting part (12) fixable to it wherein the connecting parts (12) have an attachment (14) with a **tapering and** spherically curved outer contour (16) and one or more base parts (32) are provided **wherein the base part(s) (32)** has/have an inner contour or inner surface (44) which allows the receiving or engagement of the substantially correspondingly designed attachment (14) of the associated connecting part (12), **characterised in that** the **tapering and spherically curved** outer contour (16) of the attachment (14) is curved with a radius of 15 mm to 30 mm, wherein the radius decreases towards the connecting part, in particular from 30 mm to 20 mm, and that the diameter of the attachment (14) at the occlusal end (20) is specified in the range from 2 mm to 4 mm.

2. Implant system according to claim 1, **characterised in that** the attachment (14) is designed so that it can be processed and/or can be shortened substantially from the occlusal end.

3. Implant system according to either of claims 1 or 2, **characterised in that** the outer surface (16) of the attachment (14), has retention means (26, 27) particularly in a basal region (24), or is provided with retentive elements, such as flat sections or grooves, which run, in particular, radially around the implant axis and/or are inclined at an angle of 10 to 25° to the implant axis.

4. Implant system according to any one of claims 1 to 3, **characterised in that** the outer surface (16) of the attachment (14), is provided with retention means (26, 27) particularly in the basal region (24) and/or over a length of preferably 2 mm to 5 mm, said retention means having a width of 0.05 mm to 0.4 mm and/or a depth of 0.05 to 0.4 mm, and/or that the outer surface (16) is provided with microstructures predominantly of the order of 5 to 100 microns, and/or that the outer surface (16) is coated with surfactants as bonding agents, and/or that the outer surface (16) is designed for the fixing, in particular by the cementing or gluing of the base part (32).

5. Implant system according to any one of claims 1 to 4, **characterised in that** the base part (32) has a tapering inner surface or inner contour (34), corresponding with the outer contour or outer surface (16) of the attachment (14), to receive the attachment (14), and/or that the diameter of the inner contour or inner surface (44) of the base part (32) is specified in the area of the occlusal end in the range of 2 mm to 4 mm, and/or that the inner contour or inner surface (44) of the base part (32) is at least as large or larger than the corresponding outer contour (16) of the attachment (14) by a defined amount, that is, by 0.05 mm to 0.2 mm, as appropriate.

6. Implant system according to any one of claims 1 to 5, **characterised in that** the inner contour or inner surface (44) of the base part (32) has retention means (48) over a depth or length (46), whose breadth and/or depth is/are specified in a range of 0.05 mm to 0.4 mm, and/or that the inner contour or inner surface (44) of the base part (32) has microstructures predominantly of the order of 5 to 100 microns, preferably over a specified depth or length (46), particularly in the region of 2 mm to 5 mm, and/or that the inner contour or inner surface (46) of the base part (32) over a specified depth or length (46), preferably in the region of 2 mm to 5 mm, is coated with surfactants as bonding agents.

7. Implant system according to any one of claims 1 to 6, **characterised in that** the connecting part (12) has a supporting face and/or preferably a conical chamfer (52) in the transition area to the seated base part (32) on which chamfer the basal end (50) of the base part (32) is resting, wherein the conical chamfer and/or supporting face (52) is preferably from 0.3 mm to 0.6 mm long.

8. Implant system according to any one of claims 1 to 7, **characterised in that** the base body (2) has a micro structured surface, and/or that the surface has a pore structure of substantially or predominantly from 0.2 to 5 microns, in particular of substantially 3 microns.

9. Implant system according to any one of claims 1 to 8, **characterised in that** the surface of the base body (2) has an anisotropic scale-like structure by means of which the back torque is increased or can be increased by spreading into an elastic retraction of the bone, and/or that the thread (6) of the base body (2) contains discontinuities which are arranged counter to the insertion direction such that the back torque is heightened or increased by spreading into the elastic retraction of the bone.

10. Implant system according to any one of claims 1 to 9, **characterised in that** the base body (2) contains discontinuities in the upper third of the surface, which are arranged counter to the insertion direction such that the back torque is increased or can be increased by spreading into the elastic retraction of the bone, or that the surface of the base body (2) contains discontinuities in the central third, which are arranged counter to the insertion direction such that the back torque is increased by spreading into the elastic retraction of the bone.

11. Implant system according to claim 10, **characterised in that** the discontinuities are from 0.05 to 0.4 mm deep and/or 0.4 mm to 2 mm wide, and/or that said discontinuities are overlapping and are laid counter to the insertion direction of the base body.

12. Implant system according to any one of claims 1 to 11, **characterised in that**, above the threaded region and/or the base body (2), the connecting part (12) has a transgingival region (28) whose surface is provided with a roughness of less than 0.5 microns Ra, and/or that said transgingival surface (28) is provided with a cylindrical or oval or non-round recess (30) to provide a seating for the gums, wherein, preferably, a radius from 1 mm to 3 mm is specified for the recess, and/or that the base body (2) has a recess preferably shaped with scalloped contours, wherein, preferably, the deepest point lies axially and/or radially in the region of 0.5 mm to 2 mm below the highest point.

13. Implant system according to any one of claims 1 to 12, **characterised in that**, further on, in a coronal direction, the connecting part (12) merges into a tapering outer contour which is inclined against the axial inclination or the alignment of the axis of the base body (2) by a specified angle, wherein this angle is specified preferably between 0° to 30°.

## Revendications

1. Système d'implant pour la fixation de dents artificielles, contenant des implants dentaires, lesquels comprennent un corps de base insérable (2) et une pièce de raccordement (12) pouvant être fixée sur celui-ci, les pièces de raccordement (12) présentant un téton (14) avec un contour extérieur (16) se rétrécissant et à courbure sphérique et une ou plusieurs embases (32) étant prévues, la ou les embases (32) présentant un contour intérieur ou une surface intérieure (44) qui permet d'accueillir ou de saisir le téton (14) de forme essentiellement similaire de la pièce de raccordement (12) correspondante,
**caractérisé en ce que** le contour extérieur (16) se rétrécissant et à courbure sphérique du téton (14) présente une courbure d'un rayon de 15 mm à 30 mm, le rayon diminuant vers la pièce de raccordement, en particulier de 30 mm à 20 mm, et **en ce que** le diamètre du téton (14) à l'extrémité d'occlusion (20) est prédéfini dans la plage de 2 mm à 4 mm.

2. Système d'implant suivant la revendication 1, **caractérisé en ce que** le téton (14) est formé de manière à être façonnable et/ou peut essentiellement être raccourci du côté de l'occlusion.

3. Système d'implant suivant l'une des revendications 1 ou 2, **caractérisé en ce que** la surface extérieure (16) du téton (14), présente des rétentions (26, 27), en particulier dans une zone de base (24), ou est pourvue d'éléments de rétention, tels que par exemple des méplats ou des rainures, lesquels s'étendent en particulier radialement autour de l'axe de l'implant et/ou sont inclinés d'un angle de 10 à 25° par rapport à l'axe de l'implant.

4. Système d'implant suivant l'une des revendications 1 à 3, **caractérisé en ce que** la surface extérieure (16) du téton (14) est pourvue, en particulier dans la zone de base (24) et/ou de préférence sur une longueur de 2 mm à 5 mm, de rétentions (26, 27) d'une largeur de 0,05 mm à 0,4 mm et/ou d'une profondeur de 0,05 à 0,4 mm, et/ou **en ce que** la surface extérieure (16) est pourvue de microstructures principalement de l'ordre de 5 à 100 micromètres, et/ou **en ce que** la surface extérieure (16) est revêtue de substances actives en surface servant d'agent adhésif, et/ou **en ce que** la surface extérieure (16) est conçue pour la fixation de l'embase (32), en particulier par cimentage ou collage.

5. Système d'implant suivant l'une des revendications 1 à 4, **caractérisé en ce que** l'embase (32) présente une surface intérieure ou un contour intérieur (34) se rétrécissant correspondant au contour extérieur ou à la surface extérieure (16) du téton (14) pour accueillir le téton (14), et/ou **en ce que** le diamètre du contour intérieur ou de la surface intérieure (44) de l'embase (32) est prédéfini dans la zone d'extrémité d'occlusion dans la plage de 2 mm à 4 mm, et/ou **en ce que** le contour intérieur ou la surface intérieure (44) de l'embase (32) est au moins aussi grand ou plus grand d'un montant prédéfini, utilement d'environ 0,05 mm à 0,2 mm, que le contour extérieur correspondant (16) du téton (14).

6. Système d'implant suivant l'une des revendications 1 à 5, **caractérisé en ce que** le contour intérieur ou la surface intérieure (44) de l'embase (32) présente sur une profondeur ou une longueur (46) des rétentions (48) dont la largeur et/ou la profondeur est prédéfinie dans la plage de 0,05 mm à 0,4 mm, et/ou **en ce que** le contour intérieur ou la surface intérieure (44) de l'embase (32) présente, de préférence sur une profondeur ou une longueur prédéfinie (46), en particulier dans la plage de 2 mm à 5 mm, des microstructures principalement d'un ordre de grandeur de 5 à 100 micromètres et/ou **en ce que** le contour intérieur ou la surface intérieure (46) de l'embase (32) est revêtue sur une profondeur ou une longueur prédéfinie (46), de préférence dans la plage de 2 mm à 5 mm, de substances actives en surface comme agent adhésif.

7. Système d'implant suivant l'une des revendications 1 à 6, **caractérisé en ce que** la pièce de raccordement (12) présente dans la zone de transition vers l'embase mise en place (32) une surface d'appui et/ou de préférence un biseautage conique (52), sur lequel repose l'extrémité de base (50) de l'embase (32), le biseautage conique et/ou la surface d'appui (52) présentant de préférence une longueur de l'ordre de 0,3 mm à 0,6 mm.

8. Système d'implant suivant l'une des revendications 1 à 7, **caractérisé en ce que** le corps de base (2) présente une surface microstructurée, et/ou **en ce que** la surface présente une structure de pores essentiellement ou principalement de 0,2 à 5 micromètres, en particulier essentiellement de 3 micromètres.

9. Système d'implant suivant l'une des revendications 1 à 8, **caractérisé en ce que** la surface du corps de base (2) présente une structure anisotrope en forme d'écailles, à l'aide de laquelle le couple antagoniste est augmenté ou peut être augmenté par écartement dans un mouvement de rappel élastique de l'os et/ou **en ce que** le filetage (6) du corps de base (2) contient des interruptions qui sont orientées dans le sens opposé au vissage, de telle sorte que le couple antagoniste est augmenté ou peut être augmenté par écartement dans le mouvement de rappel élastique de l'os.

10. Système d'implant suivant l'une des revendications 1 à 9, **caractérisé en ce que** le corps de base (2) contient dans le tiers supérieur de la surface des interruptions qui sont orientées de telle façon contre le sens de vissage que le couple antagoniste est augmenté ou peut être augmenté par écartement dans le mouvement de rappel élastique de l'os, ou que la surface du corps de base (2) contient dans le tiers médian des interruptions, qui sont orientées dans le sens opposé au vissage, de telle sorte que le couple antagoniste est augmenté par écartement dans le mouvement de rappel élastique de l'os.

11. Système d'implant selon la revendication 10, **caractérisé en ce que** les interruptions présentent une profondeur de l'ordre de 0,05 à 0,4 mm et/ou une largeur de l'ordre de 0,4 mm à 2 mm, et/ou **en ce que** les interruptions mentionnées sont en forme de tuile et orientées dans le sens opposé au sens de vissage du corps de base.

12. Système d'implant suivant l'une des revendications 1 à 11, **caractérisé en ce que** la pièce de raccordement (12) présente au-dessus de la zone de filetage du corps de base (2) une zone transgingivale (28) dont la surface a une rugosité prédéfinie Ra inférieure à 0,5 micromètre, et/ou **en ce que** la surface transgingivale mentionnée (28) est pourvue d'un rétrécissement (30) cylindrique ou ovale ou ovalisé pour l'incorporation de la gencive, un rayon de préférence de 1 mm à 3 mm du rétrécissement étant prédéfini, et/ou **en ce que** le corps de base (2) présente un tel rétrécissement formé de préférence en forme de guirlande, le point le plus profond axial et/ou radial se situant de préférence dans la plage de 0,5 mm à 2 mm en dessous du point le plus élevé.

13. Système d'implant suivant l'une des revendications 1 à 12, **caractérisé en ce que**, plus loin en direction coronaire, la pièce de raccordement (12) évolue vers un contour extérieur se rétrécissant, lequel est incliné d'un angle prédéfini par rapport à l'inclinaison de l'axe ou à l'orientation de l'axe du corps de base (2), cet angle étant de préférence prédéfini entre 0° et 30°.
